# EUROPÄISCHE PATENTANMELDUNG

(11) **EP 4 606 198 A1**
(43) Veröffentlichungstag der Anmeldung: **27.08.2025**
(21) Anmeldenummer: 25153712.2
(22) Anmeldetag: 24.01.2025
(51) Int. Cl.: A01B 69/04

(54) **ARBEITSZUG MIT EINEM SCHLEPPER UND EINEM BEARBEITUNGSGERÄT**

(30) Priorität: 21.02.2024 DE 102024104850
(71) Anmelder: Maschinenfabrik Bernard Krone GmbH & Co. KG, 48480 Spelle (DE)
(72) Erfinder: Horstmann, Jan, 48431 Rheine (DE)

(57) **Zusammenfassung**

Die Erfindung betrifft einen Arbeitszug (1) mit einem Schlepper (2), aufweisend einen Fahrzeugkörper (3), eine Schlepper-Steuereinheit (8) und eine von dieser ansteuerbare Lenkung (5), sowie mit einem Bearbeitungsgerät (17), das im Betriebszustand am Schlepper (2) angekoppelt ist und das eine Spursensorik (25) sowie eine Bearbeitungsgerät-Steuereinheit (23) aufweist, die dazu eingerichtet ist, beim Durchfahren eines Bearbeitungsbereichs (40) mittels der Spursensorik (25) festzustellen, ob eine Abweichung zwischen einer Ist-Position (P_{I}) des Bearbeitungsgeräts (17) in Relation zu einer Orientierungsstruktur (35) des Bearbeitungsbereichs (40) und einer Soll-Position (Ps) vorliegt. Um eine Spurführung eines Schleppers in Kombination mit unterschiedlichen Bearbeitungsgeräten zu vereinfachen, ist erfindungsgemäß vorgesehen, dass die Bearbeitungsgerät-Steuereinheit (23) dazu eingerichtet ist, bei einer Abweichung (A) von der Soll-Position (Ps) ein Steuerkommando an die Schlepper-Steuereinheit (8) zu senden, durch welches die Schlepper-Steuereinheit (8) die Lenkung (5) ansteuert, um eine Korrektur vorzunehmen, durch welche die Ist-Position (P_{I}) zumindest an die Soll-Position (Ps) angenähert wird.

## Beschreibung

Die vorliegende Erfindung betrifft einen Arbeitszug nach dem Oberbegriff von Anspruch 1, ein Bearbeitungsgerät für einen Arbeitszug nach Anspruch 9 sowie ein Betriebsverfahren für einen Arbeitszug, nach dem Oberbegriff von Anspruch 10.

Landwirtschaftliche Schlepper können heutzutage oftmals nicht nur als Zugmaschine dienen, sondern weisen zudem wenigstens ein Dreipunkthubwerk auf, an welches ein Anbaugerät angekoppelt werden kann. Das Gewicht des Anbaugeräts kann somit ganz oder teilweise vom Schlepper getragen werden. Das Anbaugerät kann außerdem durch den Schlepper mit Antriebsenergie versorgt werden. Die Energieübertragung kann mechanisch über eine Zapfwelle, hydraulisch oder elektrisch erfolgen. Das Dreipunkthubwerk kann als Front- oder Heckhubwerk ausgebildet sein. Im letzteren Fall kann der Schlepper in der Regel eine größere Last tragen. Je nach Art des Anbaugeräts wird der Schlepper während des Einsatzes rückwärts gefahren, wozu entweder die gesamte Fahrerkabine oder zumindest der Fahrersitz und die Bedienelemente um 180° gedreht werden können, um dem Fahrer Sicht in Fahrtrichtung zu ermöglichen. Für eine effiziente, planmäßige Bearbeitung eines Bearbeitungsbereichs, zum Beispiel eines Feldes, muss der Schlepper mit dem Anbaugerät jeweils entlang einer Fahrspur fahren, die in vielen Fällen durch Strukturen des Bearbeitungsbereichs vorgegeben ist, zum Beispiel durch Pflanzreihen eines Bestands. Die optimale Fahrspur, also die Soll-Fahrspur des Schleppers, entspricht einer Soll-Position des Anbaugeräts in Relation zu den Strukturen, zum Beispiel einer Relativposition zu den Pflanzreihen. Eine ähnliche Situation kann bei gezogenen Bearbeitungsgeräten gegeben sein, wie zum Beispiel bei einer gezogenen Ballenpresse. In diesem Fall orientiert sich die Soll-Fahrspur an der Lage eines Schwads, der in einem vorangehenden Bearbeitungsschritt gelegt wurde.

Der Fahrer des Schleppers kann versuchen, die Soll-Fahrspur bzw. die Soll-Position manuell einzuhalten, was allerdings ein hohes Maß an Aufmerksamkeit erfordert und nahezu zwangsläufig zu Fehlern führt. Alternativ kann die Fahrspur automatisch gesteuert werden, wobei die Struktur des Bearbeitungsbereichs sensorisch erfasst wird und bei einer Abweichung von der Soll-Fahrspur eine Lenkung des Schleppers automatisch, also ohne Eingreifen des Fahrers, betätigt wird. Neben einem mechanischen Reihentaster können berührungslose Sensoren eingesetzt werden, die passiv, zum Beispiel mittels Bilderkennung, oder aktiv, zum Beispiel mittels Lidar, die Struktur des Bearbeitungsbereichs erfassen. Der jeweilige Sensor kann am Schlepper angeordnet sein, wobei allerdings für unterschiedliche Anbaugeräte unter Umständen unterschiedliche Sensoren notwendig sind. Insofern bringt eine Anordnung am Anbaugerät Vorteile mit sich, sofern sie nicht, wie zum Beispiel im Falle eines Reihentasters, ohnehin alternativlos ist. Für eine erfolgreiche Spurführung muss eine Steuereinheit des Schleppers die Sensordaten auswerten, hieraus ein Steuersignal für die Lenkung ermitteln und die Lenkung entsprechend ansteuern. Die entsprechenden Auswertungsroutinen unterscheiden sich von Bearbeitungsgerät zu Bearbeitungsgerät und müssen dementsprechend fallweise angepasst werden, zum Beispiel indem eine entsprechende Software geladen wird.

Der Erfindung liegt daher die Aufgabe zugrunde, eine Spurführung eines Schleppers in Kombination mit unterschiedlichen Bearbeitungsgeräten zu vereinfachen.

Dafür wird ein Arbeitszug geschaffen mit einem Schlepper, aufweisend einen Fahrzeugkörper, eine Schlepper-Steuereinheit und eine von dieser ansteuerbare Lenkung, sowie mit einem Bearbeitungsgerät, das im Betriebszustand am Schlepper angekoppelt ist und das eine Spursensorik sowie eine Bearbeitungsgerät-Steuereinheit aufweist, die dazu eingerichtet ist, beim Durchfahren eines Bearbeitungsbereichs mittels der Spursensorik festzustellen, ob eine Abweichung zwischen einer Ist-Position des Bearbeitungsgeräts in Relation zu einer Orientierungsstruktur des Bearbeitungsbereichs und einer Soll-Position vorliegt.

Der Schlepper, der zumindest in einigen Ausführungsformen auch als Zugmaschine, Traktor oder dergleichen bezeichnet werden kann, ist selbstfahrend ausgebildet. Normalerweise ist er zur Steuerung durch einen Fahrer ausgebildet und weist einen Fahrerstand auf, also einen Bereich, der für den Aufenthalt des Fahrers ausgelegt ist und der den Fahrersitz aufweist sowie die Bedienelemente, mit welchen der Fahrer den Schlepper bedient. Es ist im Rahmen der Erfindung allerdings auch möglich, dass der Schlepper als autonomes Fahrzeug ausgebildet ist, das zumindest während der Feldbearbeitung ohne menschliche Steuerung fährt. Der Schlepper weist einen Fahrzeugkörper auf, der normalerweise den größten Teil des Schleppers ausmacht. Der Fahrzeugkörper kann einen Hauptrahmen aufweisen, der wesentlich für die strukturelle Stabilität des Schleppers ist. Am Fahrzeugkörper ist u.a. ein Fahrwerk angeordnet. Der oben genannte Fahrerstand ist am oder im Fahrzeugkörper ausgebildet.

Der Schlepper weist eine Schlepper-Steuereinheit auf. Diese kann zur Steuerung verschiedener Funktionen des Schleppers dienen. Sie kann teilweise softwaremäßig implementiert sein. Der Begriff "Steuereinheit" ist hier und im Folgenden rein funktional zu verstehen und impliziert nicht, dass die Steuereinheit zusammenhängend an einem einzigen Ort angeordnet sein muss. Vielmehr kann die Steuereinheit aus miteinander verbundenen Komponenten bestehen, die voneinander beabstandet sein können. In der Regel ist die Schlepper-Steuereinheit vollständig innerhalb des Fahrzeugkörpers angeordnet.

Weiterhin ist eine Lenkung vorgesehen, welche von der Schlepper-Steuereinheit angesteuert werden kann. Das heißt die Einstellung der Lenkung kann wenigstens teilweise durch die Schlepper-Steuereinheit gesteuert werden. Die Lenkung dient allgemein zur Beeinflussung der Fahrtrichtung des Schleppers. In den meisten Ausgestaltungen weist die Lenkung eine lenkbare Achse auf, insbesondere mit wenigstens zwei entlang der Querachse des Schleppers beabstandeten Rädern. Beispielsweise kann eine Achsschenkellenkung vorliegen. Die Lenkung kann des Weiteren wenigstens einen Lenkaktor aufweisen, durch welchen zum Beispiel ein Lenkwinkel veränderbar ist. Im Rahmen der Erfindung wären prinzipiell auch andere Arten von Lenkung denkbar, zum Beispiel könnten angetriebene Räder einer Achse mit unterschiedlichen Drehzahlen angetrieben werden. In diesem Fall entspräche die "Einstellung" der Lenkung dem jeweils eingestellten Drehzahlverhältnis. Die Schlepper-Steuereinheit kann die Lenkung ansteuern, was insbesondere bedeuten kann, dass sie einen Lenkaktor der Lenkung ansteuern kann.

Weiterhin weist der Arbeitszug ein Bearbeitungsgerät auf, das im Betriebszustand am Schlepper angekoppelt ist. Dies bezieht sich zumindest auf eine mechanische Verbindung, die eine Kraftübertragung vom Schlepper zum Bearbeitungsgerät ermöglicht. Bevorzugt wird der Arbeitszug ausschließlich durch einen Fahrantrieb des Schleppers bewegt, das heißt entweder weist das Bearbeitungsgerät keinen eigenen Fahrantrieb auf oder dieser ist im Betriebszustand inaktiv. Im Betriebszustand kann das Bearbeitungsgerät ganz oder teilweise am Schlepper abgestützt sein, so dass dieser wenigstens einen Teil der Gewichtskraft des Bearbeitungsgeräts aufnimmt. Aufgrund der mechanischen Verbindung ist das Bearbeitungsgerät durch den Schlepper geführt. In diesem Zusammenhang bedeutet "geführt" allerdings nicht zwangsläufig, dass die Position und Orientierung des Bearbeitungsgeräts vollständig durch den Schlepper vorgebbar sind. Je nach Ausführungsform kann der Schlepper diese gegebenenfalls nur teilweise vorgeben. Neben der mechanischen Verbindung können auch Verbindungen zur Energieübertragung und/oder zur drahtgebundenen Signalübertragung vorgesehen sein. Allgemein dient das Bearbeitungsgerät zur Feldbearbeitung, wobei der Schlepper je nach Aufgabe mit unterschiedlichen Bearbeitungsgeräten kombinierbar ist. Zu den möglichen Aufgaben zählen Bodenbearbeitung, Düngen, Mähen, Schwaden oder Wenden, Ernten und/oder Weiterverarbeiten von Erntegut. Beispielsweise kann das Bearbeitungsgerät als Feldhäcksler, Feldspritze, Grubber, Hacke, Schwader, Ballenpresse oder dergleichen ausgebildet sein. Das Bearbeitungsgerät kann seinerseits modular aufgebaut sein, zum Beispiel können im Falle eines Feldhäckslers unterschiedliche Vorsätze mit einem Einzugsrahmen kombiniert werden.

Das Bearbeitungsgerät weist wenigstens eine Bearbeitungsgerät-Steuereinheit sowie eine Spursensorik auf. Die Steuereinheit kann zur Steuerung verschiedener Funktionen des Bearbeitungsgeräts dienen. Auch sie kann teilweise softwaremäßig implementiert sein. In der Regel ist die Bearbeitungsgerät-Steuereinheit innerhalb eines schützenden Rahmens oder Gehäuses des Bearbeitungsgeräts angeordnet. Sie ist dazu eingerichtet, beim Durchfahren eines Bearbeitungsbereichs mittels der Spursensorik festzustellen, ob eine Abweichung zwischen einer Ist-Position des Bearbeitungsgeräts in Relation zu einer Orientierungsstruktur des Bearbeitungsbereichs und einer Soll-Position vorliegt. Der Bearbeitungsbereich ist ein Bereich, der im weitesten Sinne durch das Bearbeitungsgerät bearbeitet werden soll. Es handelt sich regelmäßig um ein Feld oder einen Teil eines Feldes. Die Orientierungsstruktur ist eine Struktur des Bearbeitungsbereichs, anhand welcher eine Orientierung möglich ist. Insbesondere ist es möglich und sinnvoll, eine Ist-Position des Bearbeitungsgeräts gegenüber der Orientierungsstruktur zu ermitteln, wodurch erkennbar ist, ob das Bearbeitungsgerät in vorgesehener Weise entlang des Bearbeitungsbereichs geführt wird, das heißt ob der Schlepper einer entsprechenden, geeigneten Fahrspur folgt. Die Soll-Position entspricht dabei der vorgesehenen Position des Bearbeitungsgeräts. Wenngleich hier von einer Ist-Position sowie einer Soll-Position "des Bearbeitungsgeräts" die Rede ist, kann sich dies konkret auf eine Position eines bestimmten Teils des Bearbeitungsgeräts beziehen, zum Beispiel eine mittige Spitze eines Maiserntevorsatzes oder dergleichen. Insofern, als der Bearbeitungsbereich in aller Regel durch lineare Strukturen wie Pflanzreihen, Ackerfurchen oder einen Schwad geprägt ist, können die Soll-Position und die Ist-Position als Positionen quer zur Erstreckungsrichtung dieser linearen Strukturen angesehen werden. Zum Beispiel kann die Soll-Position dadurch charakterisiert sein, dass ein bestimmter Referenzpunkt des Bearbeitungsgeräts oberhalb einer bestimmten Ackerfurche angeordnet ist, zwischen zwei bestimmten Pflanzreihen oder über einer Mitte des Schwads. Eine Abweichung zwischen der Soll-Position und der Ist-Position kann mittels der Spursensorik festgestellt werden. Statt von einer Spursensorik kann man auch von einer Spur-Sensorvorrichtung oder einer Spur-Sensoranordnung sprechen. Die Spursensorik weist wenigstens einen Spursensor auf und kann insbesondere durch einen Spursensor gebildet sein.

Die Spursensorik kann die Ist-Position direkt oder indirekt detektieren, das heißt aus den Messwerten der Spursensorik kann zumindest auf die Ist-Position geschlossen werden. Je nach Ausführungsform ist es möglich, dass die Ist-Position keinem momentanen Messwert entspricht, sondern zum Beispiel einem zeitlich gemittelten Messwert. Die Bearbeitungsgerät-Steuereinheit detektiert die Ist-Position und vergleicht sie - zumindest qualitativ - mit der Soll-Position. Das heißt die Bearbeitungsgerät-Steuereinheit kann zumindest feststellen, ob die Ist-Position von der Soll-Position abweicht. Sinnvollerweise sollte sie auch zumindest feststellen können, in welche Richtung die Abweichung besteht, also zum Beispiel ob die Ist-Position (in Fahrtrichtung gesehen) nach "links" oder "rechts" von der Soll-Position abweicht. Die Soll-Position kann innerhalb der Bearbeitungsgerät-Steuereinheit abgespeichert sein oder in einem Speicher, auf den die Bearbeitungsgerät-Steuereinheit Zugriff hat. Es sind auch Ausgestaltungen denkbar, in denen die Soll-Position situationsabhängig, zeitabhängig und/oder ortsabhängig ermittelt wird, insbesondere durch die Bearbeitungsgerät-Steuereinheit. Dies wäre zum Beispiel dann denkbar, wenn das Bearbeitungsgerät einen Schwad aufnehmen soll, der die Orientierungsstruktur bildet. In diesem Fall ist es zum Beispiel bei Rundballenpressen sinnvoll, den Schwad nicht zentral anzufahren, sondern abwechselnd seitlich versetzt. Wenngleich hier von "einer Soll-Position" die Rede ist, schließt dies ausdrücklich auch die Möglichkeit ein, dass ein Soll-Positionsbereich definiert ist. In diesem Fall ist allerdings eine Überprüfung, ob die Ist-Position innerhalb des Soll-Positionsbereichs liegt, gleichbedeutend mit einem Vergleich, ob die Ist-Position oberhalb einer oberen Bereichsgrenze oder unterhalb einer unteren Bereichsgrenze liegt. Insofern kann auch in diesem Fall von einem Vergleich mit (wenigstens) einer Soll-Position gesprochen werden.

Erfindungsgemäß ist die Bearbeitungsgerät-Steuereinheit dazu eingerichtet, bei einer Abweichung von der Soll-Position ein Steuerkommando an die Schlepper-Steuereinheit zu senden, durch welches die Schlepper-Steuereinheit die Lenkung ansteuert, um eine Korrektur vorzunehmen, durch welche die Ist-Position zumindest an die Soll-Position angenähert wird. Das heißt, wenn die Ist-Position von der Soll-Position abweicht, führt die Bearbeitungsgerät-Steuereinheit eine Korrektur aus. Hierzu nutzt sie die Lenkung des Schleppers, das heißt die Korrektur erfolgt mittels der Lenkung des Schleppers. Dies schließt die Möglichkeit ein, dass wenigstens zeitweise andere Mittel zur Korrektur der Abweichung genutzt werden. Man kann sagen, dass die Lenkung indirekt durch die Bearbeitungsgerät-Steuereinheit gesteuert wird, die dem Bearbeitungsgerät zugeordnet ist. Genauer gesagt, sendet die Bearbeitungsgerät-Steuereinheit ein Steuerkommando an die Schlepper-Steuereinheit, durch welches die Schlepper-Steuereinheit die Lenkung ansteuert, um die Korrektur vorzunehmen. Somit besteht im Betriebszustand eine signalübertragende Verbindung zwischen der Bearbeitungsgerät-Steuereinheit und der Schlepper-Steuereinheit. Die Verbindung ist zumindest einseitig gegeben, so dass die Bearbeitungsgerät-Steuereinheit das Steuerkommando senden und die Schlepper-Steuereinheit dieses empfangen kann. Es kann auch eine beidseitige Verbindung gegeben sein, so dass die Schlepper-Steuereinheit zum Beispiel eine Rückmeldung oder Bestätigung senden kann. Der Begriff "Steuerkommando" bezieht sich normalerweise auf ein digitales Kommando oder Signal, er schließt allerdings auch ein analoges Signal ein. In jedem Fall führt der Empfang des Steuerkommandos dazu, dass die Schlepper-Steuereinheit ihrerseits die Lenkung so ansteuert, dass die Korrektur erfolgt. Es erfolgt also eine indirekte Steuerung der Lenkung durch die Bearbeitungsgerät-Steuereinheit über die Schlepper-Steuereinheit. Dies kann insbesondere durch TIM (tractor implement management) realisiert werden.

Die Korrektur erfolgt derart, dass die Ist-Position wenigstens an die Soll-Position angenähert wird und diese bevorzugt auch erreicht. Im Gegensatz zu im Stand der Technik bekannten Konfigurationen, bei welchen der Schlepper Funktionen des Bearbeitungsgeräts kontrolliert, ist es bei dem erfindungsgemäßen Arbeitszug umgekehrt. Der große Vorteil liegt darin begründet, dass die Logik, die der Regelung der Ist-Position zugrunde liegt, vollständig im Bearbeitungsgerät implementiert sein kann. Die Bearbeitungsgerät-Steuereinheit, in welcher die zugrunde liegenden Regeln hardware- und/oder softwaremäßig abgelegt sein können, nutzt einerseits die im Bearbeitungsgerät angeordnete Spursensorik sowie andererseits eine am Schlepper angeordnete Aktorik, um die Ist-Position zu regeln. Hinsichtlich der zugrundeliegenden Regelungslogik wird der Schlepper vollständig entlastet.

Eine Ausführungsform sieht vor, dass das Bearbeitungsgerät als Anbaugerät ausgebildet ist. Die Bearbeitungsgerät-Steuereinheit kann dann auch als Anbaugerät-Steuereinheit bezeichnet werden. Im Betriebszustand ist ein derartiges Anbaugerät wenigstens teilweise am Schlepper abgestützt, so dass dieser wenigstens einen Teil der Gewichtskraft des Anbaugeräts aufnimmt. Insbesondere kann der Schlepper zwischen 50% und 100% der Gewichtskraft des Anbaugeräts aufnehmen. Das Anbaugerät kann insbesondere bezüglich der normalen Fahrtrichtung des Schleppers vorderseitig oder hinterseitig angekoppelt sein. Der Schlepper ist je nach Aufgabe mit unterschiedlichen Anbaugeräten kombinierbar. Beispielsweise kann das Anbaugerät als Feldhäcksler, Feldspritze, Grubber, Hacke, Schwader oder dergleichen ausgebildet sein. Das Anbaugerät kann seinerseits modular aufgebaut sein, zum Beispiel können im Falle eines Feldhäckslers unterschiedliche Vorsätze mit einem Einzugsrahmen kombiniert werden.

Prinzipiell kann ein derartiges Anbaugerät in unterschiedlicher Weise an den Schlepper gekoppelt sein. Eine bevorzugte Ausgestaltung sieht allerdings vor, dass der Schlepper ein verstellbares Schlepper-Hubwerk aufweist, das einen gegenüber dem Fahrzeugkörper schwenkbaren Oberlenker aufweist sowie zwei bezüglich einer Querachse seitlich hierzu versetzte und bezüglich einer Hochachse wenigstens teilweise darunter angeordnete Unterlenker, die aktorisch gegenüber dem Fahrzeugkörper schwenkbar sind, wobei das Anbaugerät im Betriebszustand am Schlepper-Hubwerk angekoppelt ist. Das Anbaugerät weist hierzu Ankopplungspunkte auf, die den Ankopplungspunkten des Schlepper-Hubwerks entsprechen. In der Regel ist jeder Lenker zumindest in begrenztem Maß schwenkbar mit dem Anbaugerät verbunden. Das Schlepper-Hubwerk kann bezüglich der normalen Fahrtrichtung des Schleppers an einer Vorderseite oder an einer Hinterseite des Fahrzeugkörpers angeordnet sein. In jedem Fall ist es gegenüber dem Fahrzeugkörper verstellbar. Dabei weist es einen gegenüber dem Fahrzeugkörper schwenkbaren Oberlenker auf sowie zwei bezüglich einer Querachse seitlich hierzu versetzte und bezüglich einer Hochachse wenigstens teilweise darunter angeordnete Unterlenker, die aktorisch gegenüber dem Fahrzeugkörper schwenkbar sind. Insgesamt sind drei Lenker vorgesehen, die jeweils schwenkbar mit dem Fahrzeugkörper verbunden sind. Zumindest der Oberlenker einerseits und die Unterlenker andererseits sind unabhängig voneinander schwenkbar, je nach Ausführungsform können auch die Unterlenker unabhängig voneinander schwenkbar sein. Jeder der Lenker weist an seinem schlepperfernen Ende einen Anbindungspunkt auf, der zum Beispiel als Fanghaken ausgebildet sein kann. Insgesamt sind also drei Anbindungspunkte vorhanden, weshalb das Schlepper-Hubwerk auch als Dreipunkt-Hubwerk bezeichnet werden kann. Die Unterlenker sind aktorisch schwenkbar, wozu jeweils ein Linearaktor an einem Unterlenker sowie am Fahrzeugkörper ansetzen kann. Diese Linearaktoren können als Hydraulikzylinder ausgebildet sein. Sie werden nachfolgend als Unterlenker-Aktoren oder speziell als Unterlenker-Zylinder bezeichnet. Neben einer aktiven Verstellung der Unterlenker können die Unterlenker-Aktoren, wenn sie zum Beispiel als Hydraulikzylinder ausgebildet sind, auch als passive Federelemente wirken. Die Aktoren des Schlepper-Hubwerks können unter Umständen ebenfalls durch die Schlepper-Steuereinheit ansteuerbar sein.

Das Anbaugerät kann grundsätzlich für eine beliebige Art der Feldbearbeitung vorgesehen sein. Je nach Art des Anbaugeräts kann es bezüglich der Straßen-Fahrtrichtung des Schleppers vorderseitig oder heckseitig angekoppelt sein. Die Fahrtrichtung des Schleppers während der Feldbearbeitung kann entgegengesetzt zur Straßen-Fahrtrichtung sein. Zum Beispiel kann das Anbaugerät als Anbauhäcksler ausgebildet sein. Dieser kann an einem heckseitigen Dreipunkthubwerk angekoppelt sein, wobei der Schlepper bei der Feldbearbeitung rückwärts gefahren wird. Alternativ kann das Anbaugerät zum Beispiel als Grubber oder Feldspritze ausgebildet sein. Diese können ebenfalls über ein heckseitiges Hubwerk angekoppelt sein, wobei in diesem Fall der Schlepper allerdings bei der Feldbearbeitung vorwärts gefahren wird.

Gemäß einer anderen Ausführungsform ist das Bearbeitungsgerät als gezogenes Bearbeitungsgerät mit einem eigenen Fahrwerk ausgebildet und ist im Betriebszustand zugkraftübertragend an den Schlepper angehängt. Ein derartiges gezogenes Bearbeitungsgerät kann insbesondere an eine Anhängerkupplung des Schleppers ankoppelbar sein. Es kann eine Deichsel aufweisen, die vorderseitig von einem Rahmen des Bearbeitungsgeräts abragt und die zur Ankopplung an den Schlepper dient. Die Deichsel kann ihrerseits schwenkbar mit dem Rahmen verbunden sein. Die Ankopplung an den Schlepper kann insbesondere eine freie Schwenkbarkeit der Deichsel und/oder des Bearbeitungsgeräts gegenüber dem Schlepper ermöglichen. Im Gegensatz zu einem Anbaugerät nimmt der Schlepper typischerweise über die Anhängerkupplung nur einen geringeren Teil der Gewichtskraft des Bearbeitungsgeräts auf, zum Beispiel maximal 50% oder maximal 30%. Das Bearbeitungsgerät weist ein eigenes Fahrwerk auf, das beispielsweise eine oder zwei Achsen aufweisen kann. Durch dieses Fahrwerk ist das Bearbeitungsgerät am Boden abstützbar. Insbesondere kann das Fahrwerk dazu ausgebildet sein, wenigstens zeitweise die gesamte Gewichtskraft des Bearbeitungsgeräts aufzunehmen. Allerdings ist das Fahrwerk bevorzugt nicht-angetrieben, das heißt, das Bearbeitungsgerät wird ausschließlich durch seitens des Schleppers übertragene Zugkräfte bewegt. Allerdings könnte wenigstens eine Achse des Fahrwerks aktiv oder passiv lenkbar sein. Es versteht sich, dass bei dieser Ausführungsform der Schlepper bei der Feldbearbeitung vorwärts gefahren wird. Das gezogene Bearbeitungsgerät kann für unterschiedliche Arten der Feldbearbeitung genutzt werden. Es kann beispielsweise als Quaderballenpresse, Rundballenpresse, Ladewagen, Egge, Grubber, Feldspritze oder dergleichen ausgebildet sein.

Die Orientierungsstruktur könnte zum Beispiel durch Ackerfurchen gebildet sein, wobei das Bearbeitungsgerät in vorgesehener Weise entlang der Ackerfurchen geführt werden soll. In vielen Fällen ist der Bearbeitungsbereich bereits bepflanzt, das heißt er weist einen Bestand auf. In diesen Fällen ist die Spursensorik bevorzugt dazu eingerichtet, eine durch einen Bestand im Bearbeitungsbereich gebildete Orientierungsstruktur zu detektieren. Das heißt der Arbeitszug wird bei dieser Ausführungsform durch die - im Allgemeinen sowohl sichtbaren als auch tastbaren - Strukturen geführt, die der Bestand vorgibt. Die Bearbeitung kann in einem Ernten des Bestands bestehen oder aber zum Beispiel in einem Düngen, einer Behandlung mit Pflanzenschutzmittel oder dergleichen. Alternativ kann die Spursensorik auch dazu eingerichtet sein, eine durch einen Schwad im Bearbeitungsbereich gebildete Orientierungsstruktur zu detektieren. Der Schwad kann insbesondere berührungslos detektiert werden. Die Bearbeitung besteht in diesem Fall normalerweise in einer Aufnahme des Schwads sowie gegebenenfalls einem Verpressen zu Erntegutballen.

Eine mögliche Orientierungsstruktur kann eine Bestandskante sein, also ein äußerer Rand des Bestands. Zum Beispiel kann beim Ernten des Bestands vorgesehen sein, dass das Bearbeitungsgerät (zum Beispiel ein Feldhäcksler) mit einem seitlich äußeren Ende unmittelbar an der Bestandskante entlanggeführt wird, so dass einerseits der Bestand lückenlos erfasst wird, andererseits aber eine mögliche doppelte Erfassung minimiert wird. Insbesondere können aber auch Pflanzreihen zur Orientierung genutzt werden. Dabei ist die Spursensorik dazu eingerichtet, wenigstens eine Pflanzreihe zu detektieren. Es können auch zwei oder mehr Pflanzreihen detektiert werden. Eine Pflanzreihe entspricht einer Reihe von Pflanzen innerhalb des Bestandes, wobei diese Pflanzen ungefähr in einer Linie hintereinander stehen.

Gemäß einer Ausführungsform weist die Spursensorik einen mechanischen Reihentaster auf, der dazu ausgebildet ist, wenigstens eine Pflanzreihe zu ertasten. Ein derartiger Reihentaster kann zum Beispiel mechanisch zwei benachbarte Pflanzreihen mittels Tastelementen erfassen, die als elastisch auslenkbare Arme ausgebildet sein können. Dabei kann er über eine Auslenkung der Tastelemente Positionsveränderungen gegenüber den Pflanzreihen erfassen. Wird ein Tastelement stärker ausgelenkt, weil es sich einer Pflanzreihe nähert, wird dies als Abweichung von der Soll-Position interpretiert. Es sind allerdings auch andere Ausgestaltungen eines Reihentasters denkbar, wobei unter Umständen auch ein mechanisches Ertasten einer einzigen Pflanzreihe möglich ist.

Normalerweise alternativ zu einem mechanischen Sensor wie dem Reihentaster ist ein berührungsloser Sensor sinnvoll einsetzbar. Entsprechend einer solchen Ausführungsform ist die Spursensorik dazu eingerichtet, eine Orientierungsstruktur berührungslos zu detektieren. Die Detektion kann passiv erfolgen, zum Beispiel über Bilderkennung, wobei die zugrundeliegenden Bilder auch im Infrarotspektrum erfasst werden können. Auch eine aktive Detektion ist möglich, zum Beispiel mittels Radar, Lidar oder Ultraschall. Daneben sind halb-passive Methoden denkbar, zum Beispiel eine Bilderkennung, bei welcher der beobachtete Bereich mit einer Lichtquelle für sichtbares und/oder infrarotes Licht bestrahlt wird, um dessen Ausleuchtung zu verbessern. Mittels berührungsloser Detektion können sowohl bestandsunabhängige Strukturen wie Ackerfurchen als auch Strukturen eines Bestands, insbesondere Pflanzreihen, erfasst werden. Auch eine berührungslose Detektion eines Schwads von Erntegut ist möglich.

Das Steuerkommando kann unter Umständen drahtlos übertragen werden, zum Beispiel über ein WLAN, das die beiden Steuereinheit verbindet. Unter anderem aus Gründen der Übertragungssicherheit kann es allerdings vorteilhaft sein, wenn das Bearbeitungsgerät im Betriebszustand über eine drahtgebundene Schnittstelle mit dem Schlepper verbunden ist, über welche Schnittstelle das Steuerkommando übertragbar ist. Die Schnittstelle kann insbesondere zu einem Datenbus gehören, der den Schlepper mit dem Bearbeitungsgerät verbindet. Hierbei kann es sich zum Beispiel um einen CAN-Bus handeln, welcher die hardwaremäßige Basis eines ISOBUS-Systems bildet.

Eine effektive Führung des Arbeitszugs ist prinzipiell möglich, wenn die Bearbeitungsgerät-Steuereinheit die Abweichung nur qualitativ erfasst, also ob die Ist-Position nach "links" oder nach "rechts" von der Soll-Position abweicht. In diesem Fall kann ein standardisiertes Steuerkommando gesendet werden, wodurch die Lenkung nach rechts oder nach links angesteuert wird, zum Beispiel mit einem vorgegebenen Lenkwinkel, der sich nur bezüglich des Vorzeichens unterscheidet. Um eine bessere Anpassung und somit gegebenenfalls eine schnellere Rückkehr zur Soll-Position zu erreichen, kann eine quantitative Erfassung der Abweichung sinnvoll sein. Vorteilhaft ist die Bearbeitungsgerät-Steuereinheit dazu eingerichtet, ein Ausmaß der Abweichung festzustellen und ein vom Ausmaß abhängiges Steuerkommando zu senden. Das heißt es erfolgt eine quantitative Erfassung der Abweichung. Zum Beispiel kann ein konkreter Messwert ermittelt werden (zum Beispiel 15 cm oder 23 cm etc.), oder es kann festgestellt werden, dass die Abweichung in einem bestimmten Bereich liegt (zum Beispiel zwischen 0 cm und 10 cm oder zwischen 10 cm und 20 cm etc.). In Abhängigkeit vom Ausmaß der Abweichung wird das Steuerkommando erzeugt und gesendet. Dies kann bedeuten, dass ein Steuerkommando nur oberhalb einer definierten Mindestabweichung gesendet wird, während kleinere Abweichungen als vernachlässigbar behandelt werden. Es kann auch bedeuten, dass bei einer größeren Abweichung ein anderes Steuerkommando gesendet wird als bei einer kleineren Abweichung. Zum Beispiel könnte im ersteren Fall die Schlepper-Steuereinheit angewiesen werden, einen größerer Lenkwinkel einzustellen.

Die Aufgabe wird auch gelöst mit einem Bearbeitungsgerät für einen oben beschriebenen Arbeitszug mit einem Schlepper, aufweisend einen Fahrzeugkörper, eine Schlepper-Steuereinheit und eine von dieser ansteuerbare Lenkung, wobei das Bearbeitungsgerät im Betriebszustand am Schlepper angekoppelt ist und eine Spursensorik sowie eine Bearbeitungsgerät-Steuereinheit aufweist, die dazu eingerichtet ist, beim Durchfahren eines Bearbeitungsbereichs mittels der Spursensorik festzustellen, ob eine Abweichung zwischen einer Ist-Position des Bearbeitungsgeräts in Relation zu einer Orientierungsstruktur des Bearbeitungsbereichs und einer Soll-Position vorliegt.

Erfindungsgemäß ist die Bearbeitungsgerät-Steuereinheit dazu eingerichtet, bei einer Abweichung von der Soll-Position ein Steuerkommando an die Schlepper-Steuereinheit zu senden, durch welches die Schlepper-Steuereinheit die Lenkung ansteuert, um eine Korrektur vorzunehmen, durch welche die Ist-Position zumindest an die Soll-Position angenähert wird.

Die genannten Begriffe wurden bereits mit Bezug auf den erfindungsgemäßen Arbeitszug erläutert. Bevorzugte Ausgestaltungen des erfindungsgemäßen Bearbeitungsgeräts entsprechen denen des erfindungsgemäßen Arbeitszuges.

Die Aufgabe wird weiterhin gelöst mit einem Betriebsverfahren für einen solchen Arbeitszug. Der Arbeitszug umfasst einen Schlepper sowie ein Bearbeitungsgerät. Bei einer Abweichung von der Soll-Position sendet eine Bearbeitungsgerät-Steuereinheit ein Steuerkommando an eine Schlepper-Steuereinheit, durch welches die Schlepper-Steuereinheit die Lenkung ansteuert, um eine Korrektur vorzunehmen, durch welche die Ist-Position zumindest an die Soll-Position angenähert wird.

Die Aufgabe wird weiterhin gelöst mit einem Betriebsverfahren für einen Arbeitszug mit einem Schlepper, aufweisend einen Fahrzeugkörper, eine Schlepper-Steuereinheit sowie wenigstens eine von dieser ansteuerbare Lenkung, sowie mit einem Bearbeitungsgerät, das im Betriebszustand am Schlepper angekoppelt ist und das eine Spursensorik sowie eine Bearbeitungsgerät-Steuereinheit aufweist, die beim Durchfahren eines Bearbeitungsbereichs mittels der Spursensorik feststellt, ob eine Abweichung zwischen einer Ist-Position des Bearbeitungsgeräts in Relation zu einer Orientierungsstruktur des Bearbeitungsbereichs und einer Soll-Position vorliegt.

Erfindungsgemäß sendet die Bearbeitungsgerät-Steuereinheit bei einer Abweichung von der Soll-Position ein Steuerkommando an die Schlepper-Steuereinheit, durch welches die Schlepper-Steuereinheit die Lenkung ansteuert, um eine Korrektur vorzunehmen, durch welche die Ist-Position zumindest an die Soll-Position angenähert wird.

Die genannten Begriffe wurden bereits mit Bezug auf den erfindungsgemäßen Arbeitszug erläutert. Bevorzugte Ausgestaltungen des erfindungsgemäßen Verfahrens entsprechen denen des erfindungsgemäßen Arbeitszuges.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Seitenansicht einer ersten Ausführungsform eines erfindungsgemäßen Arbeitszugs mit einem erfindungsgemäßen Bearbeitungsgerät, in einem Bearbeitungsbereich;

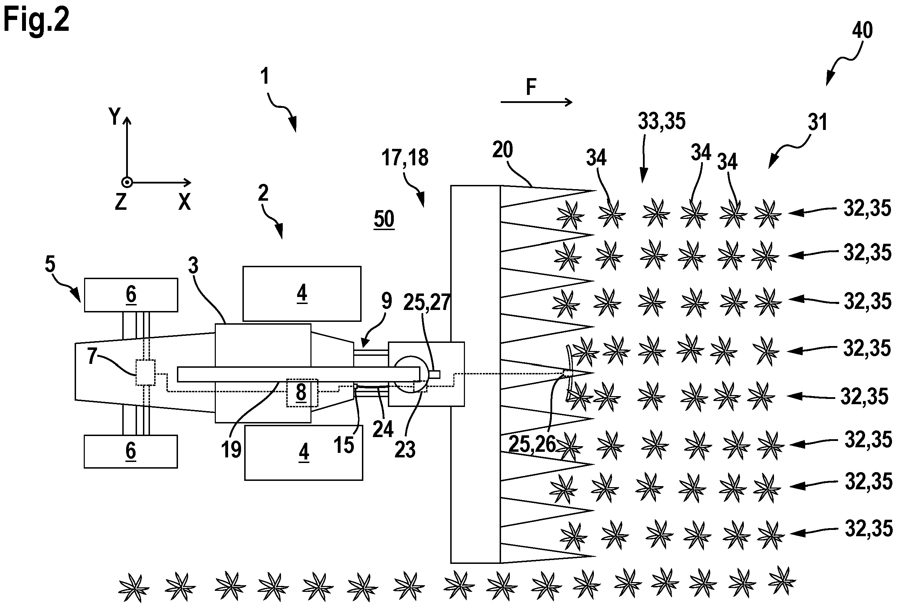

- Fig. 2: eine Draufsicht des Arbeitszugs aus Fig. 1;
- Fig. 3: eine weitere Draufsicht des Arbeitszugs aus Fig. 1;
- Fig. 4: eine Draufsicht einer zweiten Ausführungsform eines erfindungsgemäßen Arbeitszugs in einem Bearbeitungsbereich; sowie
- Fig. 5: eine Draufsicht einer dritten Ausführungsform eines erfindungsgemäßen Arbeitszugs in einem Bearbeitungsbereich.

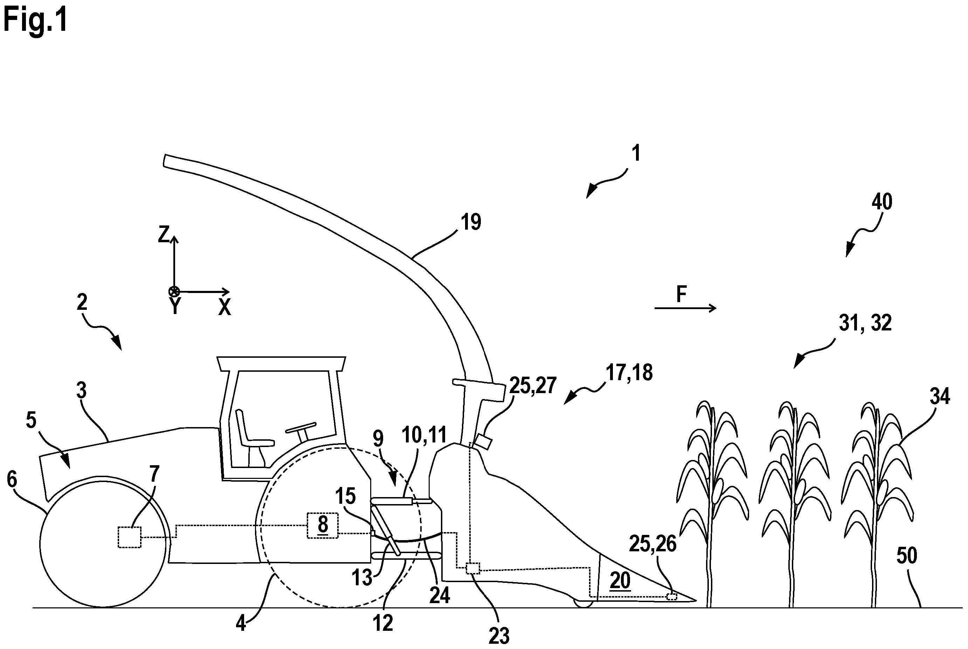

Fig. 1 zeigt eine Ausführungsform eines erfindungsgemäßen Arbeitszugs 1 in einem Bearbeitungsbereich 40, genauer gesagt einem Maisfeld. Auf einem Boden 50 des Bearbeitungsbereichs 40 wachsen Pflanzen 34, die einen Bestand 31 mit einer Mehrzahl von Pflanzreihen 32 sowie einer Bestandskante 33 bilden. Der Arbeitszug 1 weist einen Schlepper 2 auf, der von einem nicht dargestellten Fahrer gesteuert wird. Zur Orientierung sind in den Figuren eine zum Heck des Schleppers 2 weisende Längsachse X, eine Querachse Y sowie eine Hochachse Z des Arbeitszugs 1 eingezeichnet. Der Schlepper 2 weist einen Fahrzeugkörper 3 auf, mit daran angeordneten Hinterrädern 4 sowie Vorderrädern 6. An ein heckseitiges Schlepper-Hubwerk 9 des Schleppers 2 ist ein erfindungsgemäßes Bearbeitungsgerät angekoppelt, in diesem Fall ein Anbauhäcksler 18. Um den Anbauhäcksler 18 sinnvoll betreiben zu können, wird der Schlepper 2 in einer zum Heck weisenden Fahrtrichtung F gefahren, also rückwärts. Um dem Fahrer eine Sicht in Fahrtrichtung F zu ermöglichen, ist entweder die Fahrerkabine in ihrer Gesamtheit oder wenigstens der Fahrersitz sowie Steuerelemente wie das Lenkrad um 180° nach hinten geschwenkt.

Das Schlepper-Hubwerk 9, welches als Dreipunkt-Hubwerk ausgebildet ist, weist einen Oberlenker 10 auf, der gegenüber dem Fahrzeugkörper 3 schwenkbar ist. Er ist im Wesentlichen durch einen Oberlenker-Aktor 11 gebildet, der als Hydraulikzylinder ausgebildet ist. Weiterhin weist das Schlepper-Hubwerk 9 zwei Unterlenker 12 auf, die ebenfalls schwenkbar mit dem Fahrzeugkörper 3 verbunden sind. Dabei sind sie durch jeweils einen Unterlenker-Aktor 13 aktorisch schwenkbar. Auch die Unterlenker-Aktoren 13 sind als Hydraulikzylinder ausgebildet. Sämtliche Aktoren 11, 13 sind durch nicht dargestellte Hydraulikleitungen mit dem Fahrzeugkörper 3 verbunden.

Die Vorderräder 6 sind Teil einer Lenkung 5 des Schleppers 2, die außerdem einen stark schematisch dargestellten Lenkaktor 7 aufweist, durch welchen ein Lenkwinkel der Vorderräder 6 veränderbar ist. Dieser Lenkaktor 7 kann von einer im Fahrzeugkörper 3 integrierten Schlepper-Steuereinheit 8 angesteuert werden, deren Funktionen teilweise softwaremäßig implementiert sein können. Der Fahrzeugkörper 3 weist auch eine drahtgebundene Schnittstelle 15 auf, die mit der Schlepper-Steuereinheit 8 signalübertragend verbunden ist. In diesem Fall handelt es sich um eine ISOBUS-Schnittstelle.

Der Anbauhäcksler 18 weist einen Einzugsrahmen (ohne Bezugszeichen) auf, an den bezüglich der Fahrtrichtung F vorderseitig ein Erntevorsatz 20 angekoppelt ist, der je nach Bedarf ausgetauscht werden kann. In diesem Fall handelt es sich um einen Maiserntevorsatz. Über einen Auswurfbogen 19 kann Erntegut, das durch den Erntevorsatz 20 aufgenommen und im Anbauhäcksler 18 zerkleinert wurde, ausgeworfen und zum Beispiel auf ein nicht dargestelltes Begleitfahrzeug übergeladen werden. Mittig am Erntevorsatz 20 ist ein mechanischer Reihentaster 26 angeordnet, der zu einer Spursensorik 25 gehört. Außerdem ist an einem unteren, stationären Teil des Auswurfbogens 19 eine Kamera 27 angeordnet, die ebenfalls zur Spursensorik 25 gehört. Wenngleich hier sowohl der Reihentaster 26 als auch die Kamera 27 dargestellt sind, wäre eine dieser Komponenten als Spursensorik 25 ausreichend für die erfindungsgemäße Funktion des Arbeitszugs 1.

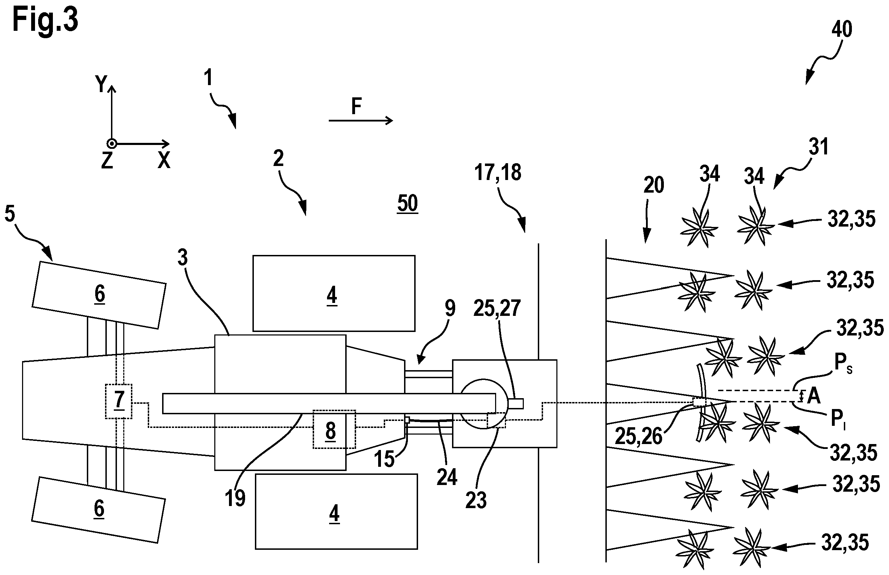

Eine Bearbeitungsgerät-Steuereinheit 23 ist einerseits signalübertragend mit jeder Spursensorik 25 verbunden sowie andererseits über eine Busleitung 24 und die Schnittstelle 15 mit der Schlepper-Steuereinheit 8. Die Bearbeitungsgerät-Steuereinheit 23 ermittelt mittels der Spursensorik 25, ob eine Ist-Position P_{I} des Anbauhäckslers 18 relativ zu den Pflanzreihen 32 von einer Soll-Position Ps abweicht. Im Falle des Reihentasters 26 ist die Soll-Position Ps daran erkennbar, dass die beiden Arme des Reihentasters durch den Kontakt mit benachbarten Pflanzreihen 32 gleich stark ausgelenkt werden. Im Falle der Kamera 27 kann durch eine Bilderkennung überprüft werden, ob die Mitte des Erntevorsatzes 20 mittig zwischen den benachbarten Pflanzreihen 32 angeordnet ist. In jedem Fall bilden die Pflanzreihen 32 eine Orientierungsstruktur 35, relativ zu welcher die Soll-Position Ps definiert ist und relativ zu welcher die Ist-Position P_{I} gemessen werden kann. Alternativ könnte auch die Bestandskante 33 als Orientierungsstruktur 35 dienen. Dabei könnte zum Beispiel wiederum durch Bilderkennung geprüft werden, ob das (bezüglich der Querachse Y) seitlich äußere Ende des Erntevorsatzes an der Bestandskante 33 positioniert ist. Die Bearbeitungsgerät-Steuereinheit erkennt, ob eine Abweichung A zwischen der Ist-Position P_{I} und der Soll-Position Ps vorliegt, wie in Fig.3 dargestellt ist. Bei der Ermittlung der Ist-Position P_{I} und/oder der Abweichung A kann die Bearbeitungsgerät-Steuereinheit 23 entweder einen Momentanwert zugrunde legen oder zum Beispiel einen zeitlich gemittelten Wert. Letzteres ist unter Umständen vorteilhaft, da ansonsten kurzfristig auftretende Abweichungen A, die beispielsweise auf dem Versatz einer einzelnen Pflanze 34 beruhen, sofort zu einer Korrektur mittels der Lenkung 5 führen würden.

Wenn eine Abweichung A festgestellt wird, führt die Bearbeitungsgerät-Steuereinheit 23 eine Korrektur durch. Dazu sendet sie ein Steuerkommando an die Schlepper-Steuereinheit 8, aus dem hervorgeht, wie die Schlepper-Steuereinheit 8 den Lenkaktor 7 ansteuern soll. In dem gezeigten Beispiel ist das Steuerkommando auch vom Ausmaß der Abweichung A abhängig. Zum Beispiel kann bei einer Abweichung A, die betragsmäßig unterhalb eines Mindestwerts (zum Beispiel 10 cm) liegt, keinerlei Steuerkommando gesendet werden oder ein Steuerkommando, das einer Ausrichtung der Vorderräder 6 parallel zur Längsachse X entspricht. Darüber hinaus könnte ein erstes Werteintervall oberhalb des Mindestwerts definiert sein (zum Beispiel von 10 cm bis 20 cm), bei welchem das Steuerkommando einem ersten Lenkwinkel entspricht (zum Beispiel 5°). Weiter könnte ein zweites Werteintervall (zum Beispiel von 20 cm bis 30 cm) definiert sein, bei welchem das Steuerkommando einem größeren zweiten Lenkwinkel entspricht (zum Beispiel 10°). Alternativ könnte in der Bearbeitungsgerät-Steuereinheit 23 auch eine zumindest annähernd kontinuierliche Abhängigkeit des Lenkwinkels von der Abweichung hinterlegt sein, zum Beispiel eine lineare Abhängigkeit. Fig.3 zeigt, dass die Schlepper-Steuereinheit 8 nach Empfang des Steuerkommandos den Lenkaktor 7 ansteuert, so dass dieser den Lenkwinkel der Vorderräder 6 verändert. Der Lenkwinkel wird so eingestellt, dass sich die Ist-Position P_{I} der Soll-Position Ps annähert.

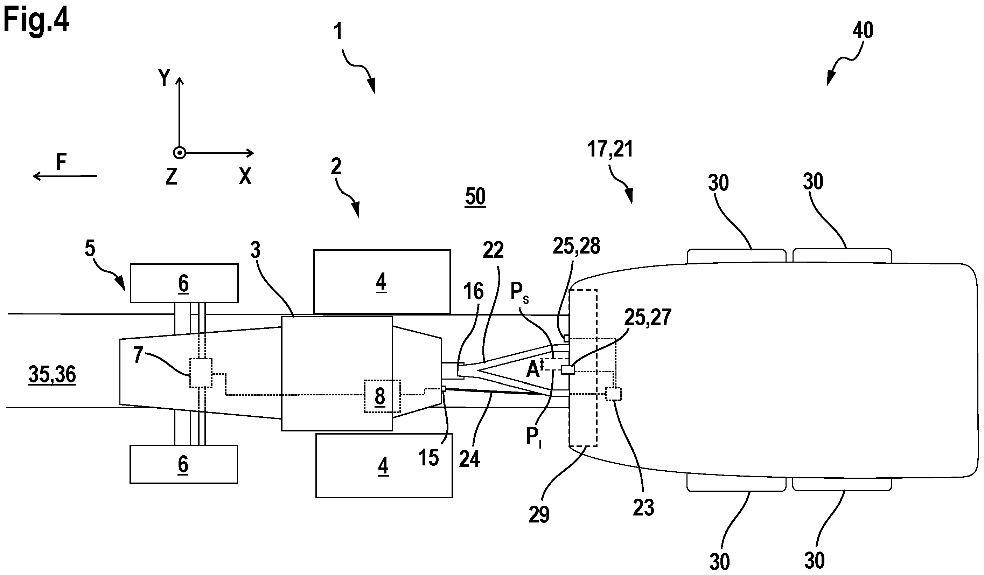

Fig.4 zeigt eine zweite Ausführungsform eines erfindungsgemäßen Arbeitszugs 1. Hier ist das Bearbeitungsgerät 17 als gezogenes Anbaugerät ausgebildet, nämlich als Ballenpresse 21. Genauer handelt es sich bei der Ballenpresse 21 um eine Quaderballenpresse, die dazu vorgesehen ist, Erntegut mittels einer Pickup 29 vom Boden 50 aufzunehmen und zu Erntegutballen zu verpressen. Die Ballenpresse 21 ist mit einer Deichsel 22 an eine heckseitige Anhängerkupplung (zum Beispiel eine Kugelkopfkupplung) 16 des Schleppers 2 angekoppelt. Sie weist ein eigenes, in diesem Fall zweiachsiges Fahrwerk 30 auf, welches einen Großteil ihrer Gewichtskraft aufnimmt. Die hier stark schematisierte Pickup 29 kann zusätzlich vom Fahrwerk 30 unabhängige Hilfsräder aufweisen. Selbstverständlich fährt der Schlepper 2 in diesem Fall vorwärts, das heißt die Fahrtrichtung F verläuft entgegengesetzt zum ersten Ausführungsbeispiel. Das aufzunehmende Erntegut wurde in (nicht dargestellten) vorangehenden Bearbeitungsschritten geschnitten und zu einem Schwad 36 zusammengelegt. Damit die Ballenpresse 21 den Schwad 36 mit der Pickup 29 optimal aufnehmen kann, sollte sie diesen in etwa mittig anfahren. Daher bildet der Schwad 36 in diesem Fall die Orientierungsstruktur 35.

Wie der Anbauhäcksler 18 im ersten Ausführungsbeispiel weist die Ballenpresse 21 eine Spursensorik 25 auf, zu welcher einerseits eine Kamera 27 sowie andererseits ein Lidar-Sensor 28 gehören. Hierdurch ist eine sensorische Redundanz gegeben, wodurch die Orientierungsstruktur zuverlässiger detektiert werden kann. Alternativ könnte zum Beispiel auf die Kamera 27 oder aber auf den Lidar-Sensor 28 verzichtet werden. Auch könnte der Lidar-Sensor 28 durch einen anderen aktiven Sensor ersetzt werden, zum Beispiel einen Ultraschall- oder Radar-Sensor. Auch die Ballenpresse 21 weist eine Bearbeitungsgerät-Steuereinheit 23 auf, die wiederum einerseits signalübertragend mit jeder Spursensorik 25 verbunden ist sowie andererseits über eine Busleitung 24 und die Schnittstelle 15 mit der Schlepper-Steuereinheit 8. Die Bearbeitungsgerät-Steuereinheit 23 ermittelt mittels der Spursensorik 25, ob eine Ist-Position P_{I} der Ballenpresse 21 relativ zum Schwad 36 von einer Soll-Position Ps abweicht. In diesem Fall ist die Soll-Position Ps so definiert, dass die Mitte der Pickup 29 vertikal über der Mitte des Schwads 36 angeordnet ist. Die Mitte des Schwads 36 wird dabei seitens der Bearbeitungsgerät-Steuereinheit 23 als Mittelwert von Positionen der seitlichen Ränder des Schwads 36 definiert. Die genannten Ränder können sowohl über Bilderkennung mittels der Kamera 27 als auch mittels des Lidar-Sensors 28 erkannt werden. Wiederum kann bei der Ermittlung der Ist-Position P_{I} und/oder der Abweichung A entweder ein Momentanwert zugrunde gelegt werden oder zum Beispiel ein zeitlich gemittelter Wert.

Wenn eine Abweichung A festgestellt wird, führt die Bearbeitungsgerät-Steuereinheit 23 eine Korrektur durch. Diese läuft grundsätzlich wie im ersten Ausführungsbeispiel ab und wird daher nicht nochmals erläutert. Allerdings kann bei diesem Ausführungsbeispiel berücksichtigt werden, dass sich Lenkbewegungen mit größerer Verzögerung auf die Ballenpresse 21 auswirken als auf ein Anbaugerät wie den Feldhäcksler 18. Beispielsweise könnte nach senden eines Steuerkommandos eine Wartezeit vorgegeben sein, die verstreichen muss, bevor ein neues Steuerkommando gesendet wird.

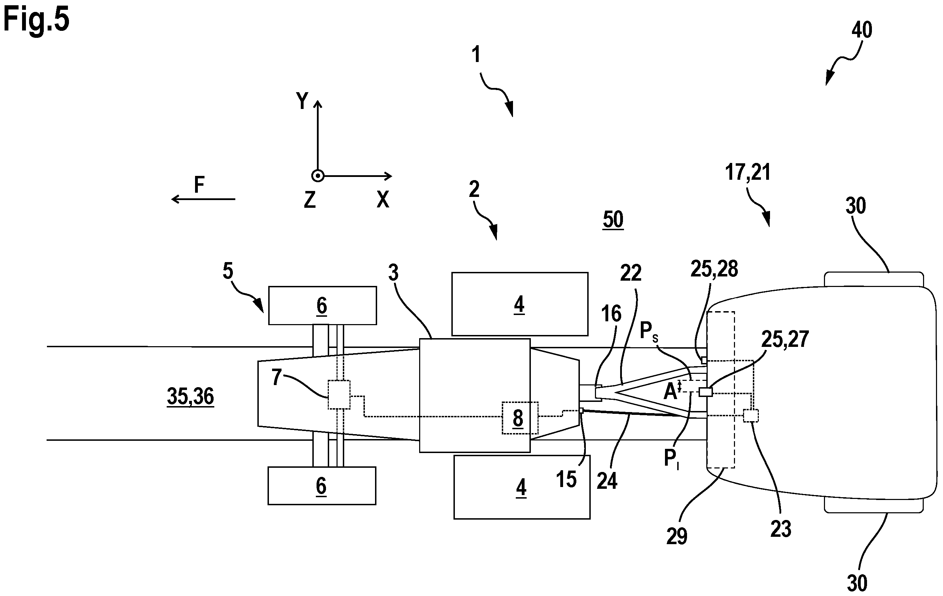

Fig.5 zeigt eine dritte Ausführungsform eines erfindungsgemäßen Arbeitszugs 1. Diese ähnelt der zweiten Ausführungsform, allerdings ist die Ballenpresse 21 in diesem Fall als Rundballenpresse ausgebildet. Das Fahrwerk 30 ist einachsig ausgebildet. Ansonsten weist auch diese Ballenpresse 21 eine Bearbeitungsgerät-Steuereinheit 23 sowie eine Kamera 27 und einen Lidar-Sensor 28 als Spursensorik 25 auf. Auch in diesem Fall muss ein Schwad 36 mit einer Pickup 29 der Ballenpresse 21 angefahren werden. Allerdings ist es für die gleichmäßige Ballenbildung in einer Rundballenpresse bekanntermaßen ungünstig, den Schwad 36 in einer gleichbleibenden Position anzufahren. Stattdessen sollte der Schwad 36 abwechselnd mehr von links und mehr von rechts angefahren werden. Daher ist die Sollposition Ps je nach Zeit und/oder Ort unterschiedlich und weicht im Allgemeinen von der Mitte des Schwads 36 ab, was auch in Fig.5 angedeutet ist. Hinsichtlich des Wechsels der Sollposition Ps kann in der Bearbeitungsgerät-Steuereinheit 23 ein festes Muster abgelegt sein oder die Bearbeitungsgerät-Steuereinheit 23 kann die Sollposition Ps dynamisch festlegen.

## Patentansprüche

1. Arbeitszug (1) mit einem Schlepper (2), aufweisend einen Fahrzeugkörper (3), eine Schlepper-Steuereinheit (8) und eine von dieser ansteuerbare Lenkung (5), sowie mit einem Bearbeitungsgerät (17), das im Betriebszustand am Schlepper (2) angekoppelt ist und das eine Spursensorik (25) sowie eine Bearbeitungsgerät-Steuereinheit (23) aufweist, die dazu eingerichtet ist, beim Durchfahren eines Bearbeitungsbereichs (40) mittels der Spursensorik (25) festzustellen, ob eine Abweichung zwischen einer Ist-Position (P_{I}) des Bearbeitungsgeräts (17) in Relation zu einer Orientierungsstruktur (35) des Bearbeitungsbereichs (40) und einer Soll-Position (Ps) vorliegt,
**dadurch gekennzeichnet, dass**
die Bearbeitungsgerät-Steuereinheit (23) dazu eingerichtet ist, bei einer Abweichung (A) von der Soll-Position (Ps) ein Steuerkommando an die Schlepper-Steuereinheit (8) zu senden, durch welches die Schlepper-Steuereinheit (8) die Lenkung (5) ansteuert, um eine Korrektur vorzunehmen, durch welche die Ist-Position (P_{I}) zumindest an die Soll-Position (Ps) angenähert wird.

2. Arbeitszug nach Anspruch 1, **dadurch gekennzeichnet, dass** das Bearbeitungsgerät (17) als Anbaugerät (18) ausgebildet ist.

3. Arbeitszug nach einem der vorangehenden Ansprüche, **dadurch gekennzeichnet, dass** der Schlepper (2) ein verstellbares Schlepper-Hubwerk (9) aufweist, das einen gegenüber dem Fahrzeugkörper (3) schwenkbaren Oberlenker (10) aufweist sowie zwei bezüglich einer Querachse (Y) seitlich hierzu versetzte und bezüglich einer Hochachse (Z) wenigstens teilweise darunter angeordnete Unterlenker (12), die aktorisch gegenüber dem Fahrzeugkörper (3) schwenkbar sind, wobei das Anbaugerät (18) im Betriebszustand am Schlepper-Hubwerk (9) angekoppelt ist

4. Arbeitszug nach Anspruch 1, **dadurch gekennzeichnet, dass** das Bearbeitungsgerät (17) als gezogenes Bearbeitungsgerät (21) mit einem eigenen Fahrwerk (30) ausgebildet ist und im Betriebszustand zugkraftübertragend an den Schlepper (2) angehängt ist.

5. Arbeitszug nach einem der vorangehenden Ansprüche, **dadurch gekennzeichnet, dass** die Spursensorik (25) dazu eingerichtet ist, eine durch einen Bestand (31) oder durch einen Schwad (36) im Bearbeitungsbereich (40) gebildete Orientierungsstruktur (35) zu detektieren.

6. Arbeitszug nach einem der vorangehenden Ansprüche, **dadurch gekennzeichnet, dass** die Spursensorik (25) dazu eingerichtet ist, wenigstens eine Pflanzreihe (32) zu detektieren.

7. Arbeitszug nach einem der vorangehenden Ansprüche, **dadurch gekennzeichnet, dass** die Spursensorik (25) einen mechanischen Reihentaster (26) aufweist, der dazu ausgebildet ist, wenigstens eine Pflanzreihe (32) zu ertasten.

8. Arbeitszug nach einem der vorangehenden Ansprüche, **dadurch gekennzeichnet, dass** die Spursensorik (25) dazu eingerichtet ist, eine Orientierungsstruktur (35) berührungslos zu detektieren.

9. Arbeitszug nach einem der vorangehenden Ansprüche, **dadurch gekennzeichnet, dass** das Bearbeitungsgerät (17) im Betriebszustand über eine drahtgebundene Schnittstelle (15) mit dem Schlepper (2) verbunden ist, über welche Schnittstelle (15) das Steuerkommando übertragbar ist.

10. Arbeitszug nach einem der vorangehenden Ansprüche, **dadurch gekennzeichnet, dass** die Bearbeitungsgerät-Steuereinheit (23) dazu eingerichtet ist, ein Ausmaß der Abweichung (A) festzustellen und ein vom Ausmaß abhängiges Steuerkommando zu senden.

11. Bearbeitungsgerät (17) für einen Arbeitszug (1) nach einem der vorangehenden Ansprüche.

12. Betriebsverfahren für einen Arbeitszug (1) mit einem Schlepper (2), aufweisend einen Fahrzeugkörper (3), eine Schlepper-Steuereinheit (8) und eine von dieser ansteuerbare Lenkung (5), sowie mit einem Bearbeitungsgerät (17), das im Betriebszustand am Schlepper (2) angekoppelt ist und das eine Spursensorik (25) sowie eine Bearbeitungsgerät-Steuereinheit (23) aufweist, die beim Durchfahren eines Bearbeitungsbereichs (40) mittels der Spursensorik (25) feststellt, ob eine Abweichung (A) zwischen einer Ist-Position des Bearbeitungsgeräts (P_{I}) in Relation zu einer Orientierungsstruktur (35) des Bearbeitungsbereichs (40) und einer Soll-Position (Ps) vorliegt,
**dadurch gekennzeichnet, dass**
die Bearbeitungsgerät-Steuereinheit (23) bei einer Abweichung von der Soll-Position (Ps) ein Steuerkommando an die Schlepper-Steuereinheit (8) sendet, durch welches die Schlepper-Steuereinheit (8) die Lenkung (5) ansteuert, um eine Korrektur vorzunehmen, durch welche die Ist-Position (P_{I}) zumindest an die Soll-Position (Ps) angenähert wird.
